# EUROPÄISCHE PATENTANMELDUNG

(11) **EP 4 787 014 A1**
(43) Veröffentlichungstag der Anmeldung: **05.08.2026**
(21) Anmeldenummer: 26154524.8
(22) Anmeldetag: 27.01.2026
(51) Int. Cl.: G01S 7/497, G01S 7/481

(54) **DETEKTIONSVORRICHTUNG ZUR ANWESENHEITS- UND/ODER ABSTANDSBESTIMMUNG SOWIE SYSTEM UMFASSEND WENIGSTENS ZWEI ERFINDUNGSGEMÄSSE DETEKTIONSVORRICHTUNGEN**

(30) Priorität: 30.01.2025 DE 102025103325
(71) Anmelder: Baumer Electric AG, 8500 Frauenfeld (CH)
(72) Erfinder: Preuss, Volker, 78464 Konstanz (DE); Grunder, Alexander, 8400 Wintherthur (CH); Thio, Christian, 6652 Tegna (CH)
(74) Vertreter: Strauss, Steffen

(57) **Zusammenfassung**

Die vorliegende Erfindung betrifft eine Detektionsvorrichtung zur Anwesenheits- und/oder Abstandsbestimmung von Messobjekten, umfassend eine Sendeeinheit zum Aussenden von nicht sichtbaren Messsignalen entlang eines Messwegs, wobei der Messweg infolge von Einbau- und/oder Bauteiltoleranzen um einen messseitigen Schielwinkel zu einer Referenzachse verkippt verläuft; Empfangs- und Auswertemittel, die so ausgebildet sind, dass aufgrund eines Messobjekts im Messweg zurückgeworfene Messsignale der Sendeeinheit für die Anwesenheits- und/oder Abstandsbestimmung des Messobjekts auswertbar sind sowie Ausrichtemittel, die so ausgebildet sind, dass ein sichtbarer Lichtstrahl entlang eines Hilfswegs unter einem den Lichtstrahlquerschnitt aufweitenden hilfsseitigen Öffnungswinkel aussendbar ist. Erfindungsgemäß ist nun vorgesehen, dass die Ausrichtemittel so ausgebildet sind, dass der Lichtstrahl innerhalb eines Messweg-Nahbereichs zum Messweg beabstandet verläuft und innerhalb eines Messweg-Fernbereichs zum Messweg überlagert verläuft, um durch den Lichtstrahlquerschnitt einen Bereich sichtbar auszuleuchten, innerhalb dem der Messweg im Rahmen der zugelassenen Einbau- und/oder Bauteiltoleranzen verläuft.

## Beschreibung

Die vorliegende Erfindung betrifft eine Detektionsvorrichtung nach Anspruch 1. Ferner betrifft die vorliegende Erfindung ein System umfassend wenigstens zwei erfindungsgemäße Detektionsvorrichtungen nach Anspruch 11.

Aus dem Stand der Technik sind Detektionsvorrichtungen zum Erfassen von Messobjekten und/oder zur Abstandsbestimmung der Messobjekte allgemein bekannt.

Bekannte Detektionsvorrichtungen senden ein nicht sichtbares Messsignal aus, das sich entlang eines Messweges ausbreitet. Befindet sich ein Messobjekt im Messweg, werden die Messsignale zumindest teilweise zur Detektionsvorrichtung zurückgeworfen, was durch Empfangsmittel und Auswertemittel, die von der Detektionsvorrichtung umfasst sind, detektierbar ist. Somit lässt sich die Anwesenheit eines Messobjekts auf dem Messweg erfassen. In Kombination mit einer Laufzeitmessung der Messsignale lässt sich zudem auch die Entfernung des Messobjekts zu einem Referenzpunkt ermitteln.

Um die Funktionsweise bekannter Detektionsvorrichtungen zu erkennen, ist es aus dem Stand der Technik bekannt, dass der Verlauf des Messwegs durch einen den Messweg koaxial überlagernden Lichtstrahl für eine Bedienperson sichtbar abgebildet wird. Ein Lichtstrahl, der mittels einer künstlichen Lichtquelle erzeugt wird, wird über optische Umlenkmittel, etwa in Form von geometrischen Strahlteilern, so umgelenkt, dass der Lichtstrahl genau dem Messweg folgt. Eine solche Lösung ist technisch aufwändig, da zum einen kostenintensive optische Bauteile verbaut und präzise ausgerichtet werden müssen und zum anderen im Rahmen der Fertigung der Detektionsvorrichtung ein Abgleich zum Ausgleich von Einbau- und/oder Bauteiltoleranzen für jede einzelne hergestellte Detektionsvorrichtung vorgenommen werden muss, um eine exakte Überlagerung des gebündelten Lichtstrahls mit dem Messsignal zur Darstellung des Messwegs zu ermöglichen.

Aufgabe der vorliegenden Erfindung ist es, die aus dem Stand der Technik bekannten Nachteile zu überwinden. Insbesondere ist es die Aufgabe der vorliegenden Erfindung, wenigstens eine Detektionsvorrichtung anzugeben, die sich kostengünstig fertigen lässt und einer Bedienperson dennoch den Verlauf eines Messwegs von nicht sichtbaren Messsignalen sichtbar anzeigt.

Diese Aufgabe wird durch eine erfindungsgemäße Detektionsvorrichtung nach Anspruch 1 gelöst. Ferner wird die Aufgabe auch durch ein erfindungsgemäßes System gemäß Anspruch 11 gelöst.

Die vorliegende Erfindung betrifft eine Detektionsvorrichtung zur Anwesenheits- und/oder Abstandsbestimmung von Messobjekten.

Die erfindungsgemäße Detektionsvorrichtung umfasst eine Sendeeinheit, die so ausgebildet ist, dass für das menschliche Auge nicht sichtbare Messsignale entlang eines Messwegs aussendbar sind, wobei der Messweg infolge von Einbau- und/oder Bauteiltoleranzen um einen messseitigen Schielwinkel zu einer Referenzachse in einer beliebigen Richtung verkippt verläuft und der messseitige Schielwinkel innerhalb eines messseitigen Winkelbereichs zwischen 0° und einem Maximalbetrag liegt, wobei der Maximalbetrag durch eine zulässige Messabweichung der erfindungsgemäßen Detektionsvorrichtung festgelegt ist.

Die Einbau- und/oder Bauteiltoleranzen beziehen sich insbesondere auf die Bauteile der Detektionsvorrichtung. Bevorzugt werden die Einbau- und/oder Bauteiltoleranzen von der Sendeeinheit und/oder von später noch genauer erläuterten Ausrichtemitteln bestimmt und/oder maßgeblich beeinflusst.

Die zulässige Messabweichung der erfindungsgemäßen Detektionsvorrichtung wird im Rahmen einer Serie mehrerer Detektionsvorrichtungen vom Hersteller festgelegt. Aus der zulässigen Messabweichung lässt sich der Maximalbetrag des messseitigen Schielwinkels ableiten.

Ferner umfasst die erfindungsgemäße Detektionsvorrichtung Empfangs- und Auswertemittel, die mit der Sendeeinheit in Wirkverbindung stehen und die so ausgebildet sind, dass Messsignale der Sendeeinheit, die aufgrund eines Messobjekts in Richtung der Detektionsvorrichtung zurückgeworfen werden, für die Anwesenheits- und/oder Abstandsbestimmung des Messobjekts auswertbar sind.

Ferner umfasst die erfindungsgemäße Detektionsvorrichtung Ausrichtemittel, die so ausgebildet sind, dass ein für das menschliche Auge sichtbarer Lichtstrahl entlang eines Hilfswegs unter einem den Lichtstrahlquerschnitt entlang des Hilfswegs aufweitenden hilfsseitigen Öffnungswinkel β_{hilf} aussendbar ist. Der hilfsseitige Öffnungswinkel β_{hilf} bezieht sich insbesondere auf eine zweite Referenzachse R2, die in einer vertikalen Montageposition der Detektionsvorrichtung, bei der der Messweg und der Hilfsweg im Wesentlichen horizontal verlaufen, horizontal ausgerichtet ist und entspricht somit einer Horizontalen.

Erfindungsgemäß ist es nun vorgesehen, dass die Ausrichtemittel so ausgebildet sind, dass der Lichtstrahl innerhalb eines Messweg-Nahbereichs zum Messweg beabstandet verläuft, insbesondere für jeden messseitigen Schielwinkel innerhalb des messseitigen Winkelbereichs, und dass der Lichtstrahl innerhalb eines Messweg-Fernbereichs zum Messweg überlagert verläuft, insbesondere für jeden messseitigen Schielwinkel innerhalb des messseitigen Winkelbereichs, um durch den Lichtstrahl und/oder den vom Lichtstrahl in Abhängigkeit der Länge des zurückgelegten Messwegs aufgeweiteten Lichtstrahlquerschnitt einen Bereich für eine Bedienperson sichtbar auszuleuchten, innerhalb dem der Messweg im Rahmen der korrekten Funktionsweise und/oder für die zugelassenen Einbau- und/oder Bauteiltoleranzen verläuft.

Anders ausgedrückt, die vorliegende Erfindung schlägt eine Detektionsvorrichtung mit einer Sendeeinheit zum Aussenden von Messsignalen entlang eines Messwegs, sowie mit Ausrichtemitteln zum Erzeugen eines Lichtstrahls vor, wobei die Einbau- und/oder Bauteiltoleranzen so gewählt sind, dass ein maximaler Schielwinkel der Messsignale innerhalb eines Fernbereichs des Messwegs gerade noch im ausgeleuchteten Bereich des sichtbaren Lichtstrahls liegt. Beim Auftreffen des Lichtstrahls auf einem Objekt, entweder dem Messobjekt oder einem Hintergrund, erzeugt der Lichtstrahl einen beleuchteten Bereich und/oder einen Beleuchtungsfleck. Dieser Beleuchtungsfleck signalisiert einer Bedienperson somit den Bereich und/oder möglichen Verlauf des Messwegs für die zugelassenen Einbau- und/oder Bauteiltoleranzen der Detektionsvorrichtung.

Der erfindungsgemäße Messweg wird im Rahmen der vorliegenden Erfindung durch den Ausbreitungsweg der Messsignale der erfindungsgemäßen Detektionsvorrichtung definiert. Der messseitige Schielwinkel αₘₑₛₛ beschreibt die Neigung der Messsignale und/oder des Messwegs in Bezug auf eine Referenzachse. Bei einer horizontalen Ausrichtung der erfindungsgemäßen Detektionsvorrichtung ist die Referenzachse bevorzugt horizontal ausgerichtet und entspricht somit insbesondere einer Horizontalen.

Die von der Sendeeinheit der Detektionsvorrichtung ausgesendeten Messsignale, die für das menschliche Auge nicht sichtbar sind, basieren insbesondere auf Infrarotstrahlung oder auf Radarstrahlung oder auf Ultraschallstrahlung.

Infrarotstrahlung bezeichnet in der vorliegenden Erfindung elektromagnetische Strahlung mit einer Wellenlänge zwischen 700nm und 3000nm, bevorzugt zwischen 780nm und 1400nm.

Radarstrahlung bezeichnet in der vorliegenden Erfindung elektromagnetische Strahlung in einem Frequenzbereich von 1GHz bis 300GHz, besonders bevorzugt hierbei sind Frequenzen um 24GHz, 61GHz, 77GHz und 122GHz. Die zurückgeworfenen Messsignale werden in diesem Zusammenhang auch als Echo bezeichnet.

Ultraschallstrahlung bezeichnet in der vorliegenden Erfindung ultraschallbasierte Messsignale. Ultraschallbasierte Messsignale umfassen einen Frequenzbereich von 20kHz bis zu einigen 100 kHz, wobei in diesem Zusammenhang anstatt von Linsen auf allgemein bekannte Formungsmittel für ultraschallbasierte Messsignale zurückgegriffen wird.

Ferner wird darauf hingewiesen, dass der Messweg zur Referenzachse in einer beliebigen Richtung geneigt verläuft. In eine beliebige Richtung geneigt bedeutet, dass der messseitige Schielwinkel insbesondere auch eine Tiefenkomponente umfassen kann.

Der Hilfsweg wird im Rahmen der vorliegenden Erfindung durch den Verlauf des sichtbaren Lichtstrahls der erfindungsgemäßen Ausrichtemittel definiert.

Der Messweg umfasst den Messweg-Nahbereich und den Messweg-Fernbereich. Ferner umfasst der Messweg einen Übergangsbereich, der zwischen dem Messweg-Nahbereich und dem Messweg-Fernbereich ausgebildet ist.

Innerhalb des Messweg-Nahbereichs breiten sich die Messsignale zum Lichtstrahl benachbart und/oder räumlich beabstandet und/oder räumlich getrennt aus. Mit anderen Worten, im Messweg-Nahbereich kommt es nicht zu einer räumlichen Überlagerung der Messsignale mit dem Lichtstrahl.

Im Messweg-Fernbereich überlagert der Lichtstrahl und/oder der vom Lichtstrahl ausgebildete Lichtpegel die ausgesendeten Messsignale vollständig, derart, dass beim Auftreffen des Lichtstrahls auf einem Objekt, insbesondere einem Messobjekt oder einem Hintergrund, ein Beleuchtungsfleck sichtbar wird, der den Bereich definiert, innerhalb dem der Messweg für die zulässigen Einbau- und/oder Bauteiltoleranzen verläuft. Mit anderen Worten, im Messweg-Fernbereich kommt es zu einer vollständigen räumlichen Überlagerung der Messsignale mit dem Lichtstrahl.

Die vorliegende Erfindung ermöglicht trotz geringer Bauteil- und/oder Montagekosten und/oder trotz den zugelassenen Bauteil- und/oder Montagetoleranzen eine vereinfachte Inbetriebnahme und/oder Ausrichtung. Ferner lässt sich der korrekte Betrieb und/oder die korrekte Funktionsweise der erfindungsgemäßen Detektionsvorrichtung mittels einer Sichtprüfung stets verifizieren, da der ausgeleuchtete Bereich, bevorzugt in der Form eines Beleuchtungsflecks, besonders bevorzugt in Form eines runden oder rechteckigen oder mehreckigen Beleuchtungsflecks auf den Messobjekten oder auf einem Hintergrund für Bedienpersonen, insbesondere Kunden, sichtbar wird.

Mit anderen Worten, der vom Lichtstrahl ausgebildete Lichtpegel markiert, insbesondere beim Auftreffen auf einem Objekt, einen Bereich, der sich um den Messweg erstreckt, derart, dass der Messweg für sämtliche messseitige Schielwinkel zwischen 0° bis zu dem Maximalbetrag innerhalb des beleuchteten Bereichs verläuft.

Die Montage- und/oder Bauteiltoleranzen, die im Rahmen der vorliegenden Erfindung berücksichtigt und/oder zugelassen werden, basieren insbesondere auf der Relativposition zwischen zum einen einer Signalquelle der Sendeeinheit und einer messseitigen Sendelinse der Sendeeinheit und/oder zum anderen zwischen einer messseitigen Empfangslinse der Empfangsmittel sowie einer Empfangseinheit der Empfangsmittel. Anders ausgedrückt, die Montage- und/oder Bauteiltoleranzen werden durch die geometrische Relativposition zwischen der Sendeeinheit und den Empfangsmitteln verursacht.

Ferner berücksichtigen die Montage- und/oder Bauteiltoleranzen insbesondere auch die optischen Eigenschaften der Sende- und Empfangslinse sowie die mechanischen Eigenschaften der Sendeeinheit und/oder der Empfangsmittel.

Weiterhin basieren die Montage- und/oder Bauteiltoleranzen auch auf den optischen und/oder mechanischen Eigenschaften der Ausrichtemittel.

Ferner wird darauf hingewiesen, dass im Rahmen der vorliegenden Erfindung der Begriff Toleranzen, bevorzugt Einbau- und/oder Bauteiltoleranzen, im Allgemeinen zulässige Abweichungen von Idealgrößen bzw. Idealzuständen bezeichnet. Die Toleranz bezeichnet somit einen Bereich zwischen einem Mindestwert oder Null und einem, bevorzugt in eine beliebige Richtung ausgerichteten, Höchstwert. Entspricht der Mindestwert Null liegt der Idealzustand vor.

Schließlich wird noch darauf hingewiesen, dass die Sendeeinheit und die Empfangsmittel durch ein einzelnes Elektronikbauteil ausgebildet sind.

Vorteilhafte Weiterbildungen der Erfindung sind in den Unteransprüchen beschrieben. In den Rahmen der Erfindung fallen sämtliche Kombinationen aus zumindest zwei von in der Beschreibung, den Ansprüchen und/oder den Figuren offenbarten Merkmalen.

Bei einer bevorzugten Weiterbildung verlaufen der Messweg-Fernbereich und der Messweg-Nahbereich entlang einer gemeinsamen Achse. Anders ausgedrückt, der Messweg-Fernbereich und der Messweg-Nahbereich sind entlang einer geraden Linie ausgebildet.

Weiterbildend ist die erfindungsgemäße Detektionsvorrichtung so ausgebildet, dass der Messweg, insbesondere der Messweg-Fernbereich und der Messweg-Nahbereich, im Wesentlichen parallel zum Hilfsweg verlaufen.

Im Wesentlichen parallel bedeutet in diesem Zusammenhang, dass der Messweg, insbesondere der Messweg-Nahbereich und der Messweg-Fernbereich, zum Hilfsweg bei einem messseitigen und/oder hilfsseitigen Schielwinkel von jeweils 0° parallel verlaufen. Hinsichtlich der zugelassenen Einbau- und/oder Bauteiltoleranzen bedeutet dies, dass der Messweg und der Hilfsweg nur dann parallel verlaufen, wenn die Einbau- und/oder Bauteiltoleranzen dem Mindestwert entsprechen. Eine Abweichung vom parallelen Verlauf kann sich somit durch den messseitigen und/oder hilfsseitigen Schielwinkel ergeben. Unabhängig hiervon wird die Überlagerung des Messwegs mit dem Lichtstrahl lediglich durch den hilfsseitigen Öffnungswinkel erzielt.

Eine Weiterbildung der erfindungsgemäßen Detektionsvorrichtung sieht vor, dass die Detektionsvorrichtung ein Sensorgehäuse mit einem ersten Durchgangsbereich für das Messsignal und einem zweiten Durchgangsbereich für den Lichtstrahl umfasst. Bevorzugt sind der erste Durchgangsbereich und der zweite Durchgangsbereich zueinander beabstandet, derart, dass der Messweg zum Hilfsweg beabstandet verläuft.

Anders ausgedrückt, in Draufsicht auf eine Vorderseite der Detektionsvorrichtung entgegen der Ausbreitungsrichtung der entlang des Messwegs von der Sendeeinheit aussendbaren Messsignale ist der erste Durchgangsbereich von dem zweiten Durchgangsbereich räumlich beabstandet, derart, dass der Messweg in einem ersten Abschnitt und/oder dem Messweg-Nahbereich räumlich beabstandet zum Hilfsweg und/oder einem vom Lichtstrahl ausgebildeten Lichtpegel verläuft.

Bei einer Weiterbildung der erfindungsgemäßen Detektionsvorrichtung umfassen die Ausrichtemittel zum Einstellen des hilfsseitigen Öffnungswinkels optisch wirkende hilfsseitige Linsenmittel.

Zunächst wird darauf hingewiesen, dass der hilfsseitige Öffnungswinkel β_{hilf} durch ein Flächenmaß einer hilfsseitigen Lichtquelle, die den Lichtstrahl erzeugt, definierbar ist.

Eine Lichtquelle mit einem größeren Flächenmaß, insbesondere einer großen LED-Emissionsfläche oder einer großen Laser-Austrittsfläche oder mehreren benachbarten Laseraustrittsflächen, führt im Vergleich zu einer Lichtquelle mit kleinerem Flächenmaß, insbesondere einer kleinen LED-Emissionsfläche oder einer kleinen Laser-Austrittsfläche oder einer einzelnen Laseraustrittsfläche, bei gleicher Abbildung, insbesondere identischen hilfsseitigen Linsenmitteln, zu einem größeren Öffnungswinkel. Bei einem gleichlangen Hilfswegabschnitt fällt bei identischer Abbildung der Lichtstrahlquerschnitt der größeren Emissionsfläche somit größer aus als der Lichtstrahlquerschnitt einer kleineren Emissionsfläche. Ferner wird darauf hingewiesen, dass der hilfsseitige Öffnungswinkel β_{hilf} in Bezug auf eine zweite Referenzachse R2 definiert ist.

Unabhängig hiervon wird der hilfsseitige Öffnungswinkel β_{hilf} zusätzlich durch die Relativposition zwischen der Lichtquelle, insbesondere einer Laserquelle oder einer LED-Lichtquelle, zum einen und den hilfsseitigen Linsenmitteln zum anderen eingestellt.

Eine Weiterbildung der erfindungsgemäßen Detektionsvorrichtung sieht vor, dass die Ausrichtemittel einen hilfsseitigen Schielwinkel α_{hilf} infolge von Einbau- und/oder Bauteiltoleranzen der Ausrichtemittel umfassen, wobei der hilfsseitige Öffnungswinkel β_{hilf} so ausgelegt ist, dass im Messweg-Fernbereich der Lichtstrahl dennoch den Messweg überlagert. Der hilfsseitige Schielwinkel α_{hilf} hat zur Folge, dass der Messweg hinsichtlich einer zweiten Referenzachse R2 in einer beliebigen Richtung verkippt verläuft.

Die zweite Referenzachse R2 ist insbesondere parallel zu der Referenzachse R, insbesondere ersten Referenzachse R, ausgerichtet.

Eine Weiterbildung der erfindungsgemäßen Detektionsvorrichtung sieht vor, dass die Sendeeinheit eine Sendelinse zur Messignalformung, insbesondere zum Einstellen eines messseitigen Öffnungswinkels βₘₑₛₛ umfasst. Der messseitige Öffnungswinkel ist insbesondere in Bezug auf die Referenzachse R definiert.

Weiterbildend und/oder ergänzend ist es ferner vorgesehen, dass die Empfangsmittel eine Empfangslinse zum Bündeln der zurückgeworfenen Messsignale auf eine Erfassungseinheit, die von den Empfangsmitteln umfasst ist, aufweist.

Weiterhin ist es in diesem Zusammenhang besonders bevorzugt, wenn die Sendelinse als eine bikonvexe Sammellinse und/oder die Empfangslinse als eine bikonvexe Sammellinse ausgebildet ist.

Ferner ist es besonders bevorzugt, wenn die Sendelinse und die Empfangslinse als einstückige und/oder monolithisch aufgebaute Doppellinse ausgebildet sind.

In diesem Zusammenhang ist es ferner bevorzugt, wenn im Übergangsbereich zwischen der Sende- und Empfangslinse eine Messsignalbarriere ausgebildet ist, um ein Übersprechen von Messsignalen von der Senderlinse zur Empfangslinse zu reduzieren, insbesondere vollständig zu unterbinden.

Die Messsignalbarriere ist bevorzugt durch ein Trennsteg ausgebildet, der in einer in der Doppellinse ausgebildeten Aussparung anordenbar ist.

Weiterhin ist es besonders bevorzugt, wenn die Sendelinse und die Empfangslinse zusammen mit den hilfsseitigen Linsenmitteln als eine einstückige und/oder monolithisch aufgebaute Trippellinse ausgebildet sind. Zum Vermeiden eines Übersprechens ist es auch in diesem Zusammenhang besonders bevorzugt, wenn eine Messsignalbarriere zumindest zwischen der Sendelinse und der Empfängerlinse vorgesehen ist.

Ferner ist es besonders bevorzugt, wenn die Sendelinse zusammen mit den hilfsseitigen Linsenmitteln als eine einstückige und/oder monolithische aufgebaute Doppellinse ausgestaltet sind.

Eine Weiterbildung der erfindungsgemäßen Detektionsvorrichtung sieht vor, dass die messseitige Sendelinse und die messseitige Empfangslinse und die hilfsseitigen Linsenmittel von einem gemeinsamen Bauteil, insbesondere einem Tubus, gehalten und/oder ausgerichtet und somit zueinander relativpositioniert sind.

Eine Weiterbildung der erfindungsgemäßen Detektionsvorrichtung sieht vor, dass der Maximalbetrag des messseitigen Schielwinkels 4°, bevorzugt 2°, besonders bevorzugt 1°, beträgt. Ferner ist es weiterbildend vorgesehen, dass der Maximalbetrag des hilfsseitigen Schielwinkels α_{hilf} 4°, bevorzugt 2°, besonders bevorzugt 1°, beträgt.

Ferner wird darauf hingewiesen, dass die erste Referenzachse R und die zweite Referenzachse R2 parallel ausgerichtet sind.

Eine Weiterbildung der erfindungsgemäßen Detektionsvorrichtung sieht vor, dass die Sendeeinheit und die Empfangsmittel durch wenigstens ein mit Bauteilen bestücktes Elektronikbauteil ausgebildet sind.

Ferner ist es besonders bevorzugt, wenn das Elektronikbauteil und eine Lichtquelle der Ausrichtemittel auf einer gemeinsamen Leiterplatte elektrisch verschalten und mechanisch festgelegt sind.

Ferner ist es besonders bevorzugt, wenn die Detektionsvorrichtung eine bestückte Leiterplatte umfasst, wobei die Leiterplatte eine Messsignalquelle der Sendeeinheit, einen Messsignalempfänger der Empfangsmittel und eine Lichtquelle der Ausrichtemittel umfasst, die jeweils durch wenigstens ein Bauteil, insbesondere ein SMD-Bauteil, ausgebildet und auf der Leiterplatte mechanisch festgelegt und elektrisch verschalten sind. Ferner ist es auch bevorzugt vorgesehen, wenn die Bauteile untereinander oder zu der Leiterplatte über Bonding, insbesondere Drahtbonding, elektrisch verschalten sind.

Zudem ist es auch besonders bevorzugt, wenn die nicht sichtbaren Messsignale auf Infrarotstrahlung oder auf Radarstrahlung oder auf Ultraschallwellen basieren.

Ferner wird im Rahmen der vorliegenden Erfindung auch Schutz beansprucht für ein System mit einer ersten erfindungsgemäßen Detektionsvorrichtung und wenigstens einer zweiten erfindungsgemäßen Detektionsvorrichtung, wobei die erste erfindungsgemäße Detektionsvorrichtung einen ersten messseitigen Schielwinkel α_{mess_1} innerhalb des messseitigen Winkelbereichs und die zweite erfindungsgemäße Detektionsvorrichtung einen zweiten messseitigen Schielwinkel α_{mess_2} innerhalb des messseitigen Winkelbereichs umfasst.

In diesem Zusammenhang wird darauf hingewiesen, dass der erste Schielwinkel α_{mess_1} und der zweite Schielwinkel α_{mess_2} identisch sein können, sich jedoch auch im Rahmen der zugelassenen Einbau- und/oder Bauteiltoleranzen voneinander unterscheiden können.

Im Folgenden ist die Erfindung beispielhaft mit Bezug auf Zeichnungen näher erläutert. Die bei den gezeigten Ausführungsformen beispielhaft dargestellte Merkmalskombination kann nach Maßgabe der obigen Ausführungen entsprechend den für einen bestimmten Anwendungsfall notwendigen Eigenschaften des erfindungsgemäßen Systems durch weitere Merkmale ergänzt werden. Auch können, ebenfalls nach Maßgabe der obigen Ausführungen, einzelne Merkmale bei den beschriebenen Ausführungsformen weggelassen werden, wenn es auf die Wirkung dieses Merkmals in einem konkreten Anwendungsfall nicht ankommt.

In den Zeichnungen sind Elemente gleicher Funktion und/oder gleichen Aufbaus mit derselben Bezugsziffer bezeichnet.

### Es zeigen:

- Fig. 1:: eine schematische Darstellung einer erfindungsgemäßen Detektionsvorrichtung gemäß einer ersten beispielhaften Ausführungsform;
- Fig. 2a-c:: eine schematische Darstellung zur Veranschaulichung der Funktionsweise der erfindungsgemäßen Detektionsvorrichtung;
- Fig. 3:: eine perspektivische Darstellung zur Veranschaulichung der Funktionsweise der erfindungsgemeäßen Detektionsvorrichtung und in
- Fig. 4a/b:: zwei weitere bevorzugte Ausführungsvarianten der erfindungsgemäßen Detektionsvorrichtung.

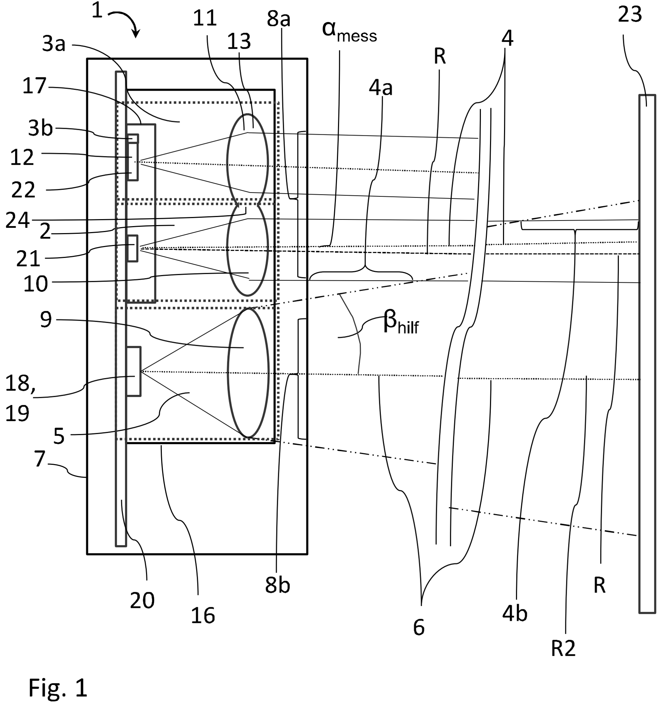

Im Folgenden sind Aufbau und Funktion einer erfindungsgemäßen Vorrichtung 1 sowie einer erfindungsgemäßen Detektionsvorrichtung 1 mit Bezug auf die Fig. 1 bis 4 beispielhaft beschrieben.

Die **Fig. 1** zeigt eine schematische Darstellung der erfindungsgemäßen Detektionsvorrichtung 1 zur Anwesenheits- und/oder Abstandsbestimmung von Messobjekten gemäß einer ersten bevorzugten Ausführungsvariante, wobei der Strahlengang anfangsseitig zum Abbilden des Nahbereichs und endseitig zum Abbilden des Fernbereichs durch eine unterbrochene Darstellung abgebildet ist.

Es wird darauf hingewiesen, dass der Übersichtlichkeit halber nicht alle Strahlverläufe, insbesondere im Fernbereich, zwischen den Empfangsmitteln 3a und dem Hintergrund 23 abgebildet sind.

Die erfindungsgemäße Detektionsvorrichtung 1 umfasst eine Sendeeinheit 2, die zum Aussenden von Messsignalen, die für das menschliche Auge nicht sichtbar sind, ausgebildet ist. Die ausgesendeten Messsignale breiten sich entlang eines Messwegs 4 in Richtung eines Hintergrunds 23 aus. Die Sendeeinheit 2 ist so ausgebildet, dass der Messweg 4 um einen messseitigen Schielwinkel αₘₑₛₛ zu einer Referenzachse R, die vorliegend horizontal ausgerichtet ist, in einer beliebigen Richtung verkippt verläuft.

Der messseitige Schielwinkel αₘₑₛₛ entsteht aufgrund von Einbau- und/oder Bauteiltoleranzen der Detektionsvorrichtung 1, wobei der messseitige Schielwinkel αₘₑₛₛ in einem Bereich zwischen 0°, insbesondere größer als 0°, und einem Maximalbetrag liegt. Der Maximalbetrag ist bei der vorliegenden Erfindung durch eine zugelassene Messabweichung der erfindungsgemäßen Detektionsvorrichtung 1 definiert und/oder festgelegt.

Weiterhin umfasst die erfindungsgemäße Detektionsvorrichtung 1 Empfangsmittel 3a sowie Auswertemittel 3b. Die Empfangs- und Auswertemittel 3a/b stehen mit der Sendeeinheit 2 in Wirkverbindung und sind dahingehend ausgebildet, dass Messsignale, die aufgrund eines an einer beliebigen Position auf dem Messweg 4 sich aufhaltenden Messobjekts, zurückgeworfen werden, erfassbar und für eine Anwesenheit- und/oder Abstandsbestimmung des Messobjekts auswertbar sind.

Weiterhin umfasst die erfindungsgemäße Detektionsvorrichtung 1 Ausrichtemittel 5, die so ausgebildet sind, dass ein für das menschliche Auge sichtbarer Lichtstrahl entlang eines Hilfswegs 6 unter einem den Lichtstrahlquerschnitt entlang des Hilfswegs 6 aufweitenden hilfsseitigen Öffnungswinkel β_{hilf} aussendbar ist.

Ferner ist es im Rahmen der vorliegenden erfindungsgemäßen Detektionsvorrichtung 1 vorgesehen, dass die erfindungsgemäßen Ausrichtemittel 5 derart ausgebildet sind, dass der Lichtstrahl, insbesondere der Hilfsweg 6, in einem ersten Abschnitt, der als Messweg-Nahbereich 4a bezeichnet wird, zum Messweg 4 beabstandet verläuft und in einem zweiten Abschnitt, der als Messweg- Fernbereich 4b bezeichnet wird, zum Messweg 4 überlagert verläuft.

Die erfindungsgemäßen Ausrichtemittel 5 sind dahingehend ausgebildet, dass der Lichtstrahl innerhalb des als Messweg-Fernbereich 4b bezeichenbaren Abschnitts des Messweges 4 einen Lichtstrahlquerschnitt umfasst, der derart groß ausfällt, dass beim Auftreffen des Lichtstrahls auf einen Körper - beispielsweise dem Messobjekt oder einem Hintergrund 23 - der Lichtstrahlquerschnitt einen sichtbaren Lichtfleck und/oder einen Bereich ausleuchtet, innerhalb dem der Messweg 4 für die zugelassenen Einbau- und/oder Bauteiltoleranzen verläuft.

Erfindungsgemäß vorteilhaft kann eine Bedienperson durch den mittels der erfindungsgemäßen Detektionsvorrichtung 1 erzeugbaren Beleuchtungsbereich die Positionen der möglichen Messwege der erfindungsgemäßen Sendeeinheit 2 für die zugelassene Einbau- und/oder Bauteiltoleranz unmittelbar erkennen.

Neben einer aufgrund des ausgeleuchteten Bereichs vereinfachten Inbetriebnahme der erfindungsgemäßen Detektionsvorrichtung 1, beispielsweise in einer Fertigungsanlage zum Herstellen der Messobjekte, kann auch im laufenden Betrieb der Fertigungsanlage der Verlauf der nichtsichtbaren Messsignale nachvollzogen werden. Vorteilhaft lässt sich somit die Funktionsweise der Detektionsvorrichtung 1 einfach überwachen und Messergebnisse verifizieren.

Ferner geht aus der **Fig. 1** hervor, dass sich der Messweg-Nahbereich 4a und der Messweg-Fernbereich 4b entlang einer gemeinsamen geraden Linie erstrecken. Darüber hinaus wird darauf hingewiesen, dass der Messweg 4 im Wesentlichen parallel zum Hilfsweg 6 ausgebildet ist, wobei die Parallelität des Messwegs und des Hilfswegs aufgrund des messseitigen Schielwinkels αₘₑₛₛ und/oder insbesondere auch aufgrund eines hilfsseitigen Schielwinkels α_{hilf} in Bezug auf eine zweite Referenzachse R2, abweichen kann.

Die erfindungsgemäße Detektionsvorrichtung 1 gemäß der figürlichen Darstellung umfasst zudem ein Sensorgehäuse 7, das einen ersten Durchgangsbereich 8a für die Messsignale und einen zweiten Durchgangsbereich 8b für den Lichtstrahl umfasst, wobei der erste Durchgangsbereich 8a vom zweiten Durchgangsbereich 8b räumlich beabstandet ist.

Durch die räumliche Trennung des ersten Durchgangsbereichs 8a vom zweiten Durchgangsbereich 8b entsteht der erfindungsgemäße Messweg-Nahbereich 4a, der sich zumindest teilweise außerhalb des Sensorgehäuses 7 erstreckt und innerhalb dem der Messweg 4 außerhalb des Lichtpegels des sich entlang des Messwegs 6 ausbreitenden Lichtstrahls liegt.

Die erfindungsgemäße Detektionsvorrichtung 1 der ersten bevorzugten Ausführungsvariante umfasst ferner eine Sendelinse 10, die von der Sendeeinheit 2 umfasst ist und die zur Messignalformung, insbesondere zum Festlegen eines messseitigen Öffnungswinkels βₘₑₛₛ ausgebildet ist.

Zudem weist die dargestellte erfindungsgemäße Detektionsvorrichtung 1 eine Empfangslinse 11 auf, die von den erfindungsgemäßen Empfangsmitteln 3a umfasst ist, und die so ausgebildet ist, dass die an einem Messobjekts reflektierten und/oder remittierten Messsignale auf einer, zum Erfassen der nicht sichtbaren Messsignale ausgebildeten Erfassungseinheit 12 bündelbar sind, wobei die Erfassungseinheit 12 von den Empfangsmitteln 3a umfasst sind.

Die Sendelinse 10 und die Empfangslinse 11 sind vorliegend als eine monolithisch ausgebildete Doppellinse 13 ausgebildet. Zur Vermeidung einer nachteiligen Interaktion ist es ferner vorliegend vorgesehen, dass eine Messsignalbarriere 24 im Übergangsbereich zwischen der Sendelinse 10 und der Empfangslinse 11 ausgebildet ist. Besonders bevorzugt ist es in diesem Zusammenhang, wenn die Messsignalbarriere 24 als ein von einem Tubus 16 ausgebildeter Trennsteg ausgebildet ist, der in einem montierten Zustand in eine im Übergangsbereich der Doppellinse 13 ausgebildete Aussparung eingreift, um das Übersprechen von Messsignalen zu reduzieren.

Weiterhin geht aus der Darstellung hervor, dass die erfindungsgemäßen Ausrichtemittel 5 optisch wirkende Linsenmittel 9 umfassen, um den hilfsseitigen Öffnungswinkel β_{hilf} in Abhängigkeit des Verlaufs des Messwegs und/oder eines möglichst großen Messweg-Fernbereichs 4b festzulegen

Die Sendelinse 10 und die Empfangslinse 11 werden zusammen mit den hilfsseitigen Linsenmitteln 9 von einem Tubus 16 gehalten. Der Tubus 16 ist als ein gemeinsames Bauteil ausgebildet, das so ausgestaltet ist, dass die Lage und die Ausrichtung der einzelnen Linsen 10/11/9 zueinander festgelegt und/oder definiert werden können.

Zudem umfasst die erfindungsgemäße Detektionsvorrichtung 1 in der dargestellten Ausführungsvariante eine Leiterplatte 20, auf der eine von der Sendeeinheit 2 umfasste Messsignalquelle 21, ein von den Empfangsmitteln 3a, insbesondere von der messseitigen Erfassungseinheit 12, umfasste Messsignalempfänger 22 sowie eine von den Ausrichtemittel 5 umfasste Lichtquelle 18 angeordnet ist.

Weiterhin realisiert der Tubus 16 auch die Relativpositionierung zwischen der Erfassungseinheit 12 und der Empfangslinse 11, zwischen der Messsignalquelle 21 und der Sendelinse 10 sowie der Lichtquelle 18 der Ausrichtemittel 5 und den hilfsseitigen Linsenmitteln 9.

Zudem wird darauf hingewiesen, dass die erfindungsgemäße Detektionsvorrichtung 1 auf Basis von Infrarotstrahlung oder Radarstrahlung oder auf Grundlage von Ultraschallwellen basieren kann. Unabhängig von der konkreten Ausgestaltung der erfindungsgemäßen Sendeeinheit 2 wird es im Rahmen der vorliegenden Erfindung ermöglicht, dass durch die erfindungsgemäßen Ausrichtemittel 5 der Lichtfleck erzeugbar ist, der einer Bedienperson den Verlauf der nicht sichtbaren Messsignale im Rahmen der zugelassenen Einbau- und/oder Bauteiltoleranzen im Bereich des Messweg-Fernbereichs 4b anzeigt.

Zudem wird darauf hingewiesen, dass die Sendeeinheit 2 zusammen mit den Empfangsmitteln 3a durch ein Elektronikbauteil 17 ausgebildet sind. Das Elektronikbauteil 17 umfasst wiederum mehrere Bauteile und lässt sich insbesondere auf dem freien Markt beziehen und auf der Leiterplatte 22 über einen entsprechenden PCB Footprint elektrisch verschalten.

Ferner wird darauf hingewiesen, dass die hilfsseitigen Linsenmittel 9 so ausgebildet sind, dass der hilfsseitige Öffnungswinkel β_{hilf} im Vergleich zum messseitigen Öffnungswinkel βₘₑₛₛ, der im Wesentlichen von der Sendelinse 10 beeinflusst wird, größer gewählt ist, derart, dass ein maximaler Schielwinkel der Messsignale innerhalb des Messweg-Fernbereichs gerade noch im ausgeleuchteten Bereich des Lichtstrahls liegt. Der maximale Schielwinkel ist durch die zulässigen Einbau- und/oder Bauteiltoleranzen festgelegt. Ferner wird darauf hingewiesen, dass beim Festlegen des Verhältnisses zwischen dem hilfsseitigen Öffnungswinkel β_{hilf} und dem messseitigen Öffnungswinkel Bₘₑₛₛ zudem das jeweilige Dimensionsmaß der Emissionsfläche der Ausrichtemittel 5 und der Sendeeinheit 2 berücksichtigt wird.

Schließlich wird noch erwähnt, dass die erfindungsgemäße Detektionsvorrichtung 1 vorliegend in einer vertikalen Montageposition an einem nicht sichtbaren Träger festgelegt ist, wobei in der vertikalen Montageposition der Messweg sowie der Hilfsweg im Wesentlichen horizontal ausgerichtet sind. Der messseitige Schielwinkel kann insbesondere auch eine Tiefenkomponente umfassen und somit in die Figurenebene geneigt verlaufen. Eine Tiefenrichtung ist quer zum Mess- und/oder Hilfsweg ausgerichtet.

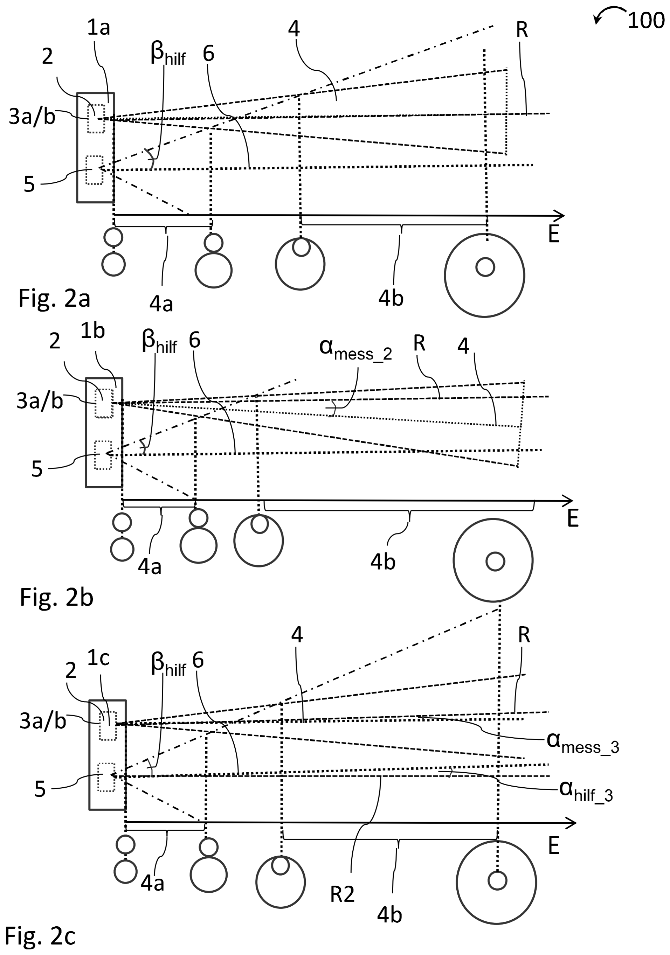

Die **Figuren 2a****-c** zeigen stark schematisierte Darstellungen erfindungsgemäßer Detektionsvorrichtungen 1a/b/c eines Systems 100 bestehend aus mehreren Detektionsvorrichtungen 1a/b/c. Die Detektionsvorrichtungen 1a/b/c sind jeweils in einer Seitenansicht zur Veranschaulichung der Funktionsweise sowie zur Darstellung des Verlaufs des Messweg-Nahbereichs 4a und des Messweg-Fernbereichs 4b über einer Entfernung E dargestellt. Die erfindungsgemäßen Detektionsvorrichtungen 1a/b/c sind in den Figuren 2a-c jeweils in einer vertikalen Montageposition positioniert.

Die einzelnen Detektionsvorrichtungen 1a/b/c des Systems 100 umfassen jeweils eine Sendeeinheit 2 zum Aussenden der nicht sichtbaren Messsignale entlang des Messweges 4 sowie die nicht im Detail dargestellten Empfangs- und Auswertemittel 3a/b, die zum Erfassen von an einem Messobjekt reflektierter Messsignale ausgebildet sind.

Ferner umfassen die jeweiligen Detektionsvorrichtungen 1a/b/c auch die erfindungsgemäßen Ausrichtemittel 5, die einen Lichtstrahl entlang eines Hilfswegs 6 aussenden, der aufgrund eines hilfsseitigen Öffnungswinkels β_{hilf} einen sich aufweitenden Lichtstrahlquerschnitt umfasst. Der hilfsseitige Öffnungswinkels β_{hilf} stimmt in den Figuren 2a-c überein.

Die einzelnen Detektionsvorrichtungen 1a/b/c des Systems 100 unterscheiden sich jedoch im Betrag des messseitigen Schielwinkels αₘₑₛₛ und/oder im Betrag des hilfsseitigen Schielwinkels α_{hilf}, was sich auf die Position und/oder Erstreckung des Messweg-Fernbereichs 4b und des Messweg- Nahbereichs 4a auswirkt.

Die erste Detektionsvorrichtung 1a gemäß der **Fig. 2a** umfasst einen messseitigen Schielwinkel α_{mess_1} von 0°. Zudem beträgt auch der hilfsseitige Schielwinkel α_{hilf} der ersten Detektionsvorrichtung 1a 0°. Es wird darauf hingewiesen, dass diese Winkel daher nicht in der **Fig. 2a** gezeigt sind.

Bei der ersten Detektionsvorrichtung 1a verläuft der Messweg 4 somit parallel zum Hilfsweg 6. Ferner sind Messweg 4 und Hilfsweg 6 in der vorliegenden Darstellung, die die erfindungsgemäße Detektionsvorrichtung 1a in der vertikalen Montageposition zeigt, jeweils horizontal ausgerichtet.

Die zweite Detektionsvorrichtung 1b gemäß der **Fig. 2b** umfasst einen zweiten messseitigen Schielwinkel α_{mess_2} von -4°. Der zweite messseitige Schielwinkel α_{mess_2} bezieht sich auf eine Referenzachse R, die vorliegend als eine Horizontale ausgebildet ist. Ferner führt der messseitige Schielwinkel α_{mess_2} zu einem Verschwenken des Messwegs 4/4a/4b innerhalb der Figurenebene. Zudem beträgt auch der zweite hilfsseitige Schielwinkel o_{hilf_2} der zweiten Detektionsvorrichtung 1a 0°, weshalb dieser - entsprechend der **Fig. 2a** - nicht eingezeichnet ist.

Im Vergleich der ersten Detektionsvorrichtungen 1a mit der zweiten Detektionsvorrichtung 1b zeigt, dass sich der unterschiedliche Schielwinkel auf die Position sowie die Erstreckung des jeweiligen Messweg-Nahbereichs 4a und des jeweiligen Messweg-Fernbereichs 4b auswirkt. Dies zeigt sich durch die Relativpositionen der jeweiligen Durchmesser des Lichtstrahls sowie der Messignale, die schematisch für unterschiedliche Entfernungen dargestellt sind.

Die dritte Detektionsvorrichtung 1c gemäß der **Fig. 2c** umfasst einen messseitigen Schielwinkel α_{mess_3} von 1,5°. Ferner beträgt auch der hilfsseitige Schielwinkel a_{hilf_3} der dritten Detektionsvorrichtung 1c 2°. Der hilfsseitige Schielwinkel α_{hilf_3} bezieht sich auf eine zweite Referenzachse R2, die vorliegend horizontal ausgerichtet ist.

Auch hier zeigt ein Vergleich mit der ersten Detektionsvorrichtung 1a, der zweiten Detektionsvorrichtung 1b und der dritten Detektionsvorrichtung 1c, dass sich auch der hilfsseitige Schielwinkel α_{hilf_3} auf die Lage und Erstreckung des jeweiligen Messweg-Nahbereichs 4a und des Messweg-Fernbereichs 4b auswirkt.

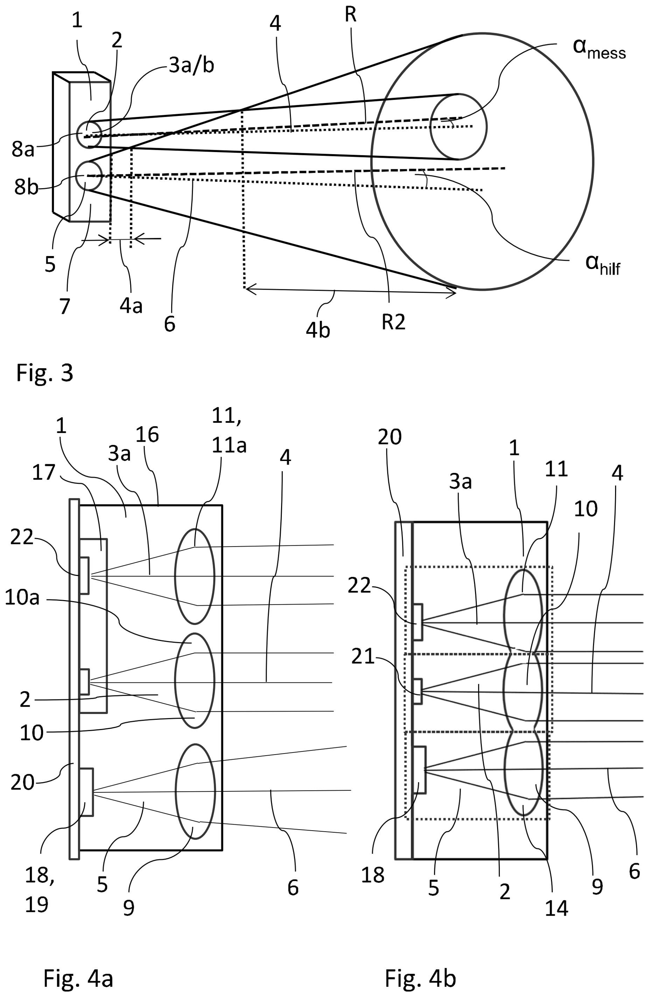

Die **Fig. 3** zeigt die erfindungsgemäße Detektionsvorrichtung 1 gemäß einer weiteren bevorzugten Ausführungsvariante in einer perspektivischen Darstellung. Aus der Figur geht hervor, dass der messseitige Schielwinkel αₘₑₛₛ in einer beliebigen Richtung geneigt zu Referenzachse R ausgerichtet sein kann. In einer beliebigen Richtung geneigt bedeutet vorliegend, dass der messseitige Schielwinkel αₘₑₛₛ so gewählt ist, dass ein Verkippen des Messwegs 4/4a/b zusätzlich in einer quer zu einer Vertikalebene verlaufenden Tiefenrichtung vorliegt.

Dies gilt entsprechend auch für den hilfsseitigen Schielwinkel α_{hilf,} der vorliegend auch entlang der Tiefenrichtung geneigt zur zweiten Referenzachse R2 ausgerichtet ist.

Unabhängig hiervon kann dennoch ab einer herstellerseitigen festlegbaren Mindestentfernung erzielt werden, dass der mittels den Ausrichtemitteln 5 erzeugbare Lichtstrahl einen Bereich ausleuchtet, innerhalb dem der Messweg 4 bzw. der Messweg-Fernbereich 4b verläuft.

Die vorliegende erfindungsgemäße Detektionsvorrichtung 1 entspricht im Wesentlichen der ersten Ausführungsvariante gemäß der **Fig. 1****.** Um Wiederholungen zu vermeiden, gelten für die weiteren vergebenen Bezugsziffern die Ausführungen von oben.

In den **Fig. 4a****/b** ist die erfindungsgemäße Detektionsvorrichtung 1 gemäß zwei weiteren bevorzugten Ausführungsvarianten dargestellt.

Zur Vermeidung von Wiederholungen, werden im Folgenden nur die Unterschiede zu der aus der **Fig. 1** bekannten ersten Ausführungsvariante beschrieben. Für Bezugsziffern, die nicht erläutert sind, gilt daher die Beschreibung von oben.

Im Ausführungsbeispiel gemäß der **Fig. 4a** umfasst die Sendeeinheit 2 eine als separates Bauteil ausgebildete Sendelinse 10. Die Sendelinse 10 ist vorliegend als eine bikonvexe Sammellinse 10a ausgebildet, um die Messsignale entlang des Messwegs 4 auszurichten.

Ferner umfassen auch die Empfangsmittel 3a der erfindungsgemäßen Detektionsvorrichtung 1 eine als separates Bauteil ausgebildete Empfangslinse 11. Auch die Empfangslinse der Empfangsmittel 3a ist als eine bikonvexe Sammellinse 11a ausgebildet, um reflektierte Messsignale auf den Messsignalempfänger 22 zu fokussieren. Beide bikonvexen Sammellinsen 10a/11a werden zusammen mit den hilfsseitigen Linsenmitteln 9 von einem Tubus 16 gehalten.

Weiterhin umfasst die erfindungsgemäße Detektionsvorrichtung 1 gemäß der **Fig. 4a** ein Elektronikbauteil 17, das die Sendeeinheit 2 und die Empfangsmittel 3a zumindest teilweise ausbildet. Das Elektronikbauteil 17 umfasst mehrere Bauteile und ist als eine integrale Einheit auf einer Leiterplatte 20 der erfindungsgemäßen Detektionsvorrichtung 1 mechanisch festgelegt und elektrisch verschalten. Konkret umfasst das Elektronikbauteil 17 den durch wenigstens ein Bauelement ausgebildeten Messsignalempfänger 22 sowie die durch wenigstens ein Bauelement ausgebildete Messsignalquelle 21.

Die Lichtquelle 18 der erfindungsgemäßen Ausrichtemittel 5 sind vorliegend durch einen LED-Sport und/oder durch eine Emissionsfläche 19 ausgebildet, der/die zwecks elektrischer Verschaltung und mechanischer Ausrichtung auf der Leiterplatte 20 so angeordnet ist, dass der Lichtstrahl mit den vom Tubus 17 ausgerichteten hilfsseitigen Linsenmitteln 9 in Wirkverbindung tritt.

Ferner wird darauf hingewiesen, dass die hilfsseitigen Linsenmittel 9 so ausgebildet sind, dass der hilfsseitige Öffnungswinkel β_{hilf} im Vergleich zum messseitigen Öffnungswinkel βₘₑₛₛ, der im Wesentlichen von der Sendelinse 10 beeinflusst wird, größer gewählt ist, derart, dass ein maximaler Schielwinkel der Messsignale innerhalb des Messweg-Fernbereichs gerade noch im ausgeleuchteten Bereich des Lichtstrahls liegt. Der maximale Schielwinkel ist durch die zulässigen Einbau- und/oder Bauteiltoleranzen festgelegt. Ferner wird darauf hingewiesen, dass beim Festlegen des Verhältnisses zwischen dem hilfsseitigen Öffnungswinkel β_{hilf} und dem messseitigen Öffnungswinkel βₘₑₛₛ zudem das jeweilige Dimensionsmaß der Emissionsfläche der Ausrichtemittel 5 und der Sendeeinheit 2 berücksichtigt wird.

Im Ausführungsbeispiel gemäß der **Fig. 4b** umfasst die erfindungsgemäße Detektionsvorrichtung 1 eine monolithische Trippellinse 14, die funktional durch eine zusammenhängende Sendelinse 10 der Sendeeinheit 2, eine Empfangslinse 11 der Empfangsmittel 3a und die hilfsseitigen Linsenmittel 9 der Ausrichtemittel 5 ausgebildet sind.

Ferner umfasst die erfindungsgemäße Detektionsvorrichtung 1 gemäß dem Ausführungsbeispiel der **Fig. 4b** eine Leiterplatte 20, die eine von der Sendeeinheit 2 umfasste Messsignalquelle 21, einen von den Empfangsmitteln 3a umfassten Messsignalempfänger 22 und eine von den Ausrichtemittel 5 umfasste Lichtquelle 18 aufweist, die separat und jeweils durch wenigstens ein SMD-Bauteil unmittelbar auf der Leiterplatte 20 mechanisch festgelegt und elektrisch verschalten sind.

Die Trippellinse 14 ist so ausgebildet, dass der hilfsseitige Öffnungswinkel β_{hilf} im Vergleich zum messseitigen Öffnungswinkel βₘₑₛₛ größer gewählt ist, derart, dass ein maximaler Schielwinkel der Messsignale innerhalb des Messweg-Fernbereichs gerade noch im ausgeleuchteten Bereich des Lichtstrahls liegt. Der maximale Schielwinkel ist hierbei durch die zulässigen Einbau- und/oder Bauteiltoleranzen festgelegt. Ferner wird darauf hingewiesen, dass beim Festlegen des Verhältnisses zwischen dem hilfsseitigen Öffnungswinkel β_{hilf} und dem messseitigen Öffnungswinkel βₘₑₛₛ zudem das jeweilige Dimensionsmaß der Emissionsfläche der Ausrichtemittel 5 und der Sendeeinheit 2 berücksichtigt wird.

## Patentansprüche

1. Detektionsvorrichtung (1) zur Anwesenheits- und/oder Abstandsbestimmung von Messobjekten, umfassend
- eine Sendeeinheit (2), die so ausgebildet ist, dass für das menschliche Auge nicht sichtbare Messsignale entlang eines Messwegs (4) aussendbar sind, wobei der Messweg infolge von Einbau- und/oder Bauteiltoleranzen um einen messseitigen Schielwinkel (αₘₑₛₛ) zu einer Referenzachse (R) in einer beliebigen Richtung verkippt verläuft und der messseitige Schielwinkel (αₘₑₛₛ) innerhalb eines messseitigen Winkelbereichs zwischen 0° und einem Maximalbetrag liegt, wobei der Maximalbetrag durch eine zulässige Messabweichung der Detektionsvorrichtung (1) festgelegt ist;
- mit der Sendeeinheit (2) in Wirkverbindung stehende Empfangs- (3a) und Auswertemittel (3b), die so ausgebildet sind, dass aufgrund eines Messobjekts im Messweg (4) zurückgeworfene Messsignale der Sendeeinheit (2) für die Anwesenheits- und/oder Abstandsbestimmung des Messobjekts auswertbar sind sowie
- Ausrichtemittel (5), die so ausgebildet sind, dass ein für das menschliche Auge sichtbarer Lichtstrahl entlang eines Hilfswegs (6) unter einem den Lichtstrahlquerschnitt entlang des Hilfswegs (6) aufweitenden hilfsseitigen Öffnungswinkel (β_{hilf}) aussendbar ist,
**dadurch gekennzeichnet,**
**dass** die Ausrichtemittel (5) so ausgebildet sind, dass der Lichtstrahl
- innerhalb eines Messweg-Nahbereichs (4a) zum Messweg beabstandet verläuft, insbesondere für sämtliche messseitige Schielwinkel im messseitigen Winkelbereich, und
- innerhalb eines Messweg-Fernbereichs (4b) zum Messweg überlagert verläuft, insbesondere für sämtliche messseitige Schielwinkel im messseitigen Winkelbereich, um durch den Lichtstrahlquerschnitt einen Bereich sichtbar auszuleuchten, innerhalb dem der Messweg (4) für die zugelassenen Einbau- und/oder Bauteiltoleranzen verläuft, wobei die Sendeeinheit (2) und die Empfangsmittel (3a) durch ein Elektronikbauteil (17) ausgebildet sind.

2. Detektionsvorrichtung nach Anspruch 1,
**dadurch gekennzeichnet,**
**dass** der Messweg-Fernbereich (4b) und der Messweg-Nahbereich (4a) entlang einer gemeinsamen Achse und/oder geraden Linie angeordnet sind und/oder
**dass** der Messweg (4), insbesondere der Messweg-Nahbereich (4a) und der Messweg-Fernbereich (4b), im Wesentlichen parallel zum Hilfsweg (6) ausgerichtet ist.

3. Detektionsvorrichtung nach Anspruch 1 oder 2,
**dadurch gekennzeichnet,**
**dass** die Detektionsvorrichtung (1) ein Sensorgehäuse (7) mit einem ersten Durchgangsbereich (8a) für das Messsignal und einem zweiten Durchgangsbereich (8b) für den Lichtstrahl umfasst, wobei der erste Durchgangsbereich (8a) und der zweite Durchgangsbereich (8b) insbesondere zueinander beabstandet sind.

4. Detektionsvorrichtung nach einem der vorgenannten Ansprüche,
**dadurch gekennzeichnet,**
**dass** die Ausrichtemittel (5) zum Einstellen des hilfsseitigen Öffnungswinkels (β_{hilf}) optisch wirkende hilfsseitige Linsenmittel (9) umfassen.

5. Detektionsvorrichtung nach einem der vorgenannten Ansprüche,
**dadurch gekennzeichnet,**
**dass** die Ausrichtemittel (5) einen hilfsseitigen Schielwinkel (α_{hilf}) infolge von Einbau- und/oder Bauteiltoleranzen der Ausrichtemittel (5) umfassen.

6. Detektionsvorrichtung nach einem der vorgenannten Ansprüche,
**dadurch gekennzeichnet,**
**dass** die Sendeeinheit (2) eine Sendelinse (10) zur Messignalformung, insbesondere zum Einstellen eines messseitigen Öffnungswinkels (βₘₑₛₛ), umfasst und/oder
**dass** die Empfangsmittel (3a) eine Empfangslinse (11) zum Bündeln der zurückgeworfenen Messsignale auf eine Erfassungseinheit (12), die von den Empfangsmitteln (3a) umfasst ist, aufweist.

7. Detektionsvorrichtung nach Anspruch 6,
**dadurch gekennzeichnet,**
**dass** die Sendelinse (10) als eine bikonvexe Sammellinse (10a) und/oder die Empfangslinse (11) als eine bikonvexe Sammellinse (11a) ausgebildet ist und/oder dass die Sendelinse (10) und die Empfangslinse (11) als einstückige und/oder monolithisch aufgebaute Doppellinse (13) ausgebildet sind und/oder
**dass** die Sendelinse (10) und die Empfangslinse (11) zusammen mit den hilfsseitigen Linsenmitteln (9) als eine einstückige und/oder monolithisch aufgebaute Trippellinse (14) ausgebildet sind und/oder
**dass** die Sendelinse (10) zusammen mit den hilfsseitigen Linsenmitteln (9) als einstückige und/oder monolithisch aufgebaute Doppellinse realisiert sind.

8. Detektionsvorrichtung nach einem der Ansprüche 4 bis 7,
**dadurch gekennzeichnet,**
**dass** die Sendelinse (10) und die Empfangslinse (11) und die hilfsseitigen Linsenmittel (9) von einem gemeinsamen Bauteil, insbesondere einem Tubus (16), gehalten und/oder ausgerichtet sind.

9. Detektionsvorrichtung nach einem der vorgenannten Ansprüche,
**dadurch gekennzeichnet,**
**dass** der Maximalbetrag des messseitigen Schielwinkels (αₘₑₛₛ) 4°, bevorzugt 2°, besonders bevorzugt 1°, beträgt.

10. Detektionsvorrichtung nach einem der vorgenannten Ansprüche,
**dadurch gekennzeichnet,**
**dass** die Detektionsvorrichtung (1) eine Leiterplatte (20) umfasst, wobei die Leiterplatte (20) eine von der Sendeeinheit (2) umfasste Messsignalquelle (21), einen von den Empfangsmitteln (3a) umfassten Messsignalempfänger (22) und eine von den Ausrichtemittel (5) umfasste Lichtquelle (18) umfasst, die jeweils als wenigstens ein Bauteil, insbesondere ein SMD-Bauteil, ausgebildet und auf der Leiterplatte (20) elektrisch verschalten und mechanisch ausgerichtet sind und/oder
**dass** die Sendeeinheit (2) und die Empfangsmittel (3a) durch wenigstens ein mit Bauteilen bestücktes Elektronikbauteil (17) ausgebildet sind und/oder
**dass** das Elektronikbauteil (17) und die Lichtquelle (18) der Ausrichtemittel (5) auf der Leiterplatte (20) elektrisch verschalten und mechanisch festgelegt sind und/oder
**dass** die nicht sichtbaren Messsignale auf Infrarotstrahlung oder auf Radarstrahlung oder auf Ultraschallwellen basieren.

11. System (100) umfassend eine erste Detektionsvorrichtung (1a) und wenigstens eine zweite Detektionsvorrichtung (1b), die jeweils nach einem der vorgenannten Ansprüche ausgebildet sind, wobei die erste Detektionsvorrichtung (1a) einen ersten messseitigen Schielwinkel (α_{mess_1}) innerhalb des messseitigen Winkelbereichs und die zweite Detektionsvorrichtung (2a) einen zweiten messseitigen Schielwinkel (α_{mess_2}) innerhalb des messseitigen Winkelbereichs umfasst.
